# EUROPEAN PATENT APPLICATION

(11) **EP 3 127 591 A1**
(43) Date of publication of application: **08.02.2017**
(21) Application number: 16181503.0
(22) Date of filing: 27.07.2016
(51) Int. Cl.: B01D 35/00, B06B 3/00, B08B 3/12

(54) **APPARATUS FOR TREATING FLUIDS WITH ULTRASOUND**

(30) Priority: 03.08.2015 IT UB20152755
(71) Applicant: Ecotecne S.r.l., 35015 Galliera Veneta (PD) (IT)
(72) Inventor: MARTINI, Bruno, 31100 Treviso (IT)
(74) Representative: Modiano, Micaela Nadia

(57) **Abstract**

An apparatus (10) for treating fluids with ultrasound, comprising at least one tubular jacket (11), which defines a duct (13) for a fluid being treated, at least one body (15) being provided and fixed integrally to the at least one tubular jacket (11) to support a plurality of generators of ultrasonic vibrations (23) in order to vibrate the at least one tubular jacket (11), which is connected to the supporting body so as to allow vibration transmission in order to generate ultrasonic cavitation.

## Description

The present invention relates to an apparatus for treating fluids with ultrasound.

It is currently known that ultrasonic vibrations generate cavitation in liquids.

Currently, cavitation is used increasingly for example in ultrasonic washing systems, for jewels, watch parts and other small items, as well in the emulsification of two or more different fluids, such as for example diesel fuel and water, in order to provide fuels that have a lower environmental impact.

Currently known apparatuses for treating fluids with ultrasonic vibrations use tubes or probes with vibrating plates, which are preset to be immersed in a tank that contains the fluid to be treated.

This solution is found to be insufficient to treat the fluid contained in the tank, obtaining a limited radius of action, unwanted turbulence in the container, and the formation of deposits in the container proper which are difficult to clean.

Within the scope of the emulsification of diesel fuel and water, a device is currently known which is disclosed and claimed in Italian patent no. 1402779 by the same Applicant and comprises two facing plates, which are connected peripherally by welding spots and by a continuous perimetric weld and which, by cooperating, allow to obtain an effective joining of the plates in order to prevent their separation due to the vibrations to which they are subjected during use; the plates thus joined define an emulsification chamber for said water and said fuel, ultrasonic transducers being mounted on the plates which are adapted to impart thereto a vibration in order to emulsify the content of the emulsification chamber.

This solution allows treatment at a relatively modest fluid flow rate, since the joined plates define a flattened chamber, which is studied specifically to allow the fluid to flow as much as possible over the vibrating surfaces of the chamber; such an emulsifying device, with a flat chamber, is therefore effective but turns out to be a component that slows a production process in which it is arranged to work.

Moreover, this solution can only work at very low pressures.

Furthermore, apparatuses for treating fluids with ultrasound of the known type are unsuitable for the treatment of agroalimentary fluids due to the specific respective drawbacks, i.e., difficulty in cleaning, impossibility to vary the operating pressure, and relatively low flow rate.

The aim of the present invention is to provide an apparatus for treating fluids with ultrasound that is capable of obviating the cited limitations of apparatuses of the known type for treating fluids with ultrasound.

Within this aim, an object of the invention is to provide an apparatus that is capable of treating a larger flow rate of fluid than known apparatuses.

Another object of the invention is to provide an apparatus that is simpler to clean than apparatuses of the known type.

A further object of the invention is to provide an apparatus that is capable of treating in an optimum manner a larger quantity of fluid than apparatuses of the known type.

Another object of the invention is to provide an apparatus by means of which it is possible to work with an operating pressure for the fluid which is higher than one atmosphere.

Another important object of the invention is to provide an apparatus that can be used in the field of the treatment of agroalimentary fluids, such as wine and alcoholic beverages in general, medicinal infusions, and the like.

This aim, as well as these and other objects that will become better apparent hereinafter, are achieved by an apparatus for treating fluids with ultrasound, characterized in that it comprises at least one tubular jacket, which defines a duct for a fluid being treated, at least one body being provided and fixed integrally to said at least one tubular jacket to support a plurality of generators of ultrasonic vibrations in order to vibrate said at least one tubular jacket, said jacket being connected to said supporting body so as to allow vibration transmission for the generation of ultrasonic cavitation.

Further characteristics and advantages of the invention will become better apparent from the description of two preferred but not exclusive embodiments of the apparatus for treating agroalimentary fluids according to the invention, illustrated by way of nonlimiting example in the accompanying drawings, wherein:

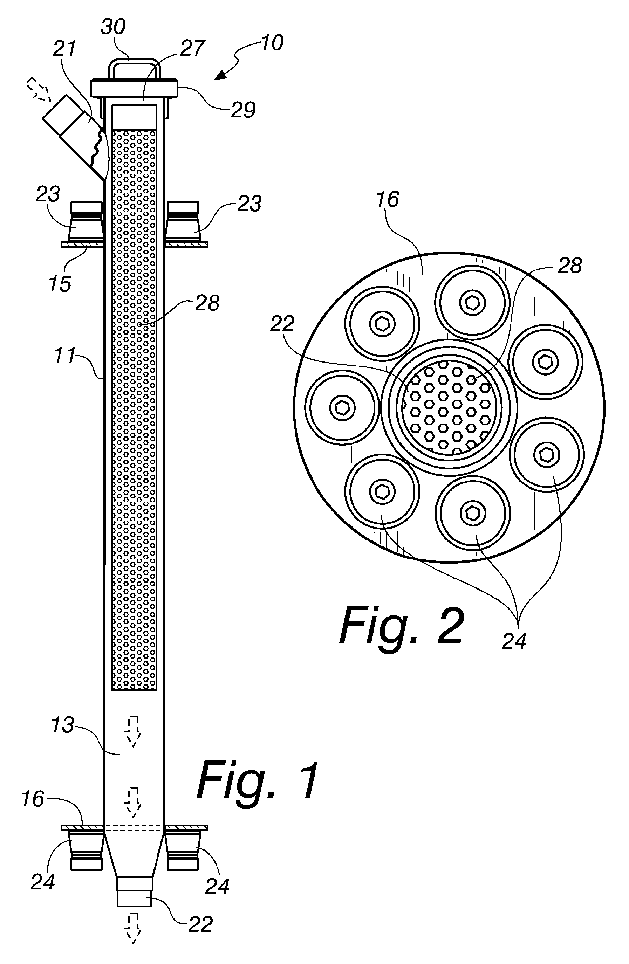

Figure 1 is a sectional front view of an apparatus according to the invention in a first embodiment thereof;
Figure 2 is a bottom plan view of the apparatus of Figure 1 according to the invention;
Figure 3 is a sectional front view of an apparatus according to the invention in a second embodiment thereof;
Figure 4 is a bottom plan view of the apparatus of Figure 3 according to the invention;
Figure 5 is a sectional side view of the apparatus according to the invention of Figure 3;
Figure 6 is a schematic view of a plant that comprises an apparatus according to the invention;
Figure 7 is a schematic view of a further plant that comprises an apparatus according to the invention;
Figure 8 is a schematic view of another plant that comprises an apparatus according to the invention;
Figure 9 is a view of an example of use of an apparatus according to the invention in its first embodiment;
Figure 10 is a bottom view of the apparatus as in Figure 9.

With reference to the figures, an apparatus for treating fluids with ultrasound, in particular for agroalimentary fluids, according to the invention, is generally designated in its first embodiment by the reference numeral 10.

The apparatus 10 for treating fluids with ultrasound comprises a tubular jacket 11, which defines a duct 13 for a fluid being treated.

Two supporting bodies 15 and 16 are provided and are fixed integrally to the tubular jacket 11 for a plurality of generators of ultrasonic vibrations 23 and 24 respectively, for the vibration of the tubular jacket 11, which is connected to the supporting bodies 15 and 16 so as to allow the transmission of the vibrations in order to generate ultrasonic cavitation.

The tubular jacket 11 is provided with two passage ports for the fluid being treated, for example an intake port 21 and a discharge port 22.

In this first embodiment, which is to be understood as a nonlimiting example of the invention, the two supporting bodies 15 and 16 are each constituted by an annular flange that is welded to the tubular jacket 11 proximate to a passage port thereof 21 or 22 for the fluid being treated.

In particular, a first supporting body 15 is welded to the tubular jacket 11 proximate to the intake port 21 and the second supporting body 16 is welded proximate to the discharge port 22.

The ultrasonic vibration generators 23 and 24 are of the type that operates between 20 kHz and 60 kHz.

The ultrasonic vibration generators determine the synchronized oscillation of the two supporting bodies 15 and 16 and of the tubular jacket 11 with them; this causes the generation of the phenomenon of cavitation in the fluid that flows over the tubular jacket 11 and accordingly the fluid that flows over such tubular jacket is affected and modified by the phenomenon.

The tubular jacket 11 has an upper fluid passage port 21 that is inclined laterally and an axial opening 27 for the insertion of a cartridge 28 that is preset to carry solid or liquid materials with which one wishes the fluid being treated to make contact.

The cartridge 28 is fixed to the tubular jacket 11 by means of a ring 29 that is preset to be screwed to a corresponding threaded portion of the end of the inner tubular jacket 11.

The cartridge 28 is provided with an actuation handle 30 in order to facilitate its insertion and extraction with respect to the tubular jacket 11.

The ultrasonic vibrations transmitted by the vibration generators 23 and 24 cause a transfer of substances from the materials contained in the cartridge 28, such substances mixing intimately with the fluid being treated by way of the emulsifying effect produced by ultrasonic cavitation.

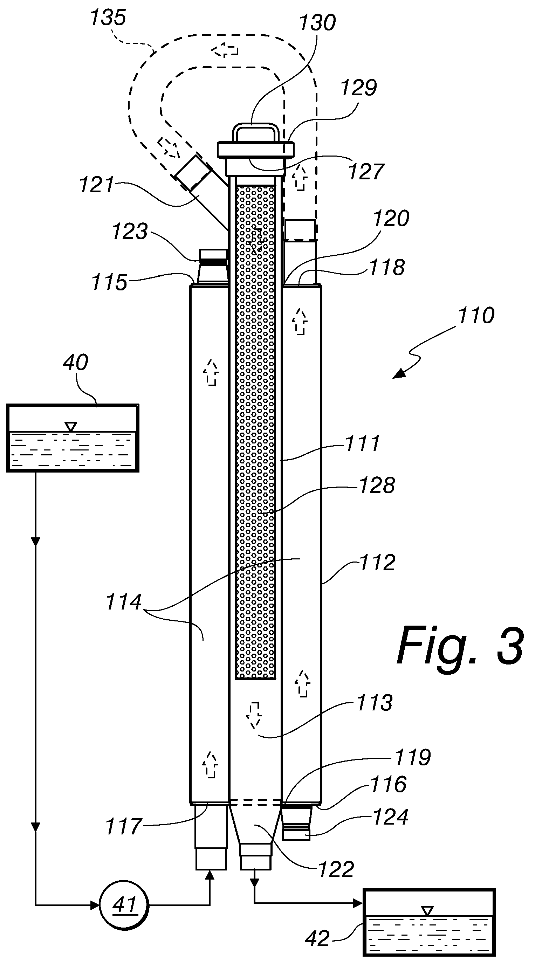

Figures 3, 4 and 5 show an apparatus according to the invention in a second embodiment thereof, designated therein by the numeral 110.

The apparatus 110 comprises two concentric tubular jackets 111 and 112, an inner tubular jacket 111 and an outer tubular jacket 112, which define a central duct 113 and a surrounding annular duct 114.

The two supporting bodies 115 and 116 for the vibration generators 123 and 124 are constituted by two opposite covers arranged so as to close the annular duct 114.

Each one of the supporting bodies 115 and 116 has a passage port, respectively 117 and 118, for the fluid that passes within the annular duct 114, and a central opening, respectively 119 and 120, that is crossed by the inner tubular jacket 111.

The inner tubular jacket 111 is provided at its ends with corresponding passage ports 121 and 122 for the fluid being treated.

Each one of the covers that defines the supporting bodies 115 and 116 is integral with both of the concentric tubular jackets 111 and 112, for example by welding, so as to allow vibration transmission.

Each supporting body 115 and 116 has a plurality of ultrasonic vibration generators 123 and 124 for the vibration of such supporting bodies and of the tubular jackets connected to such supporting bodies, so as to allow the transmission of the vibrations in order to generate ultrasonic cavitation.

The supporting bodies 115 and 116 are obviously closed hermetically on the tubular jackets.

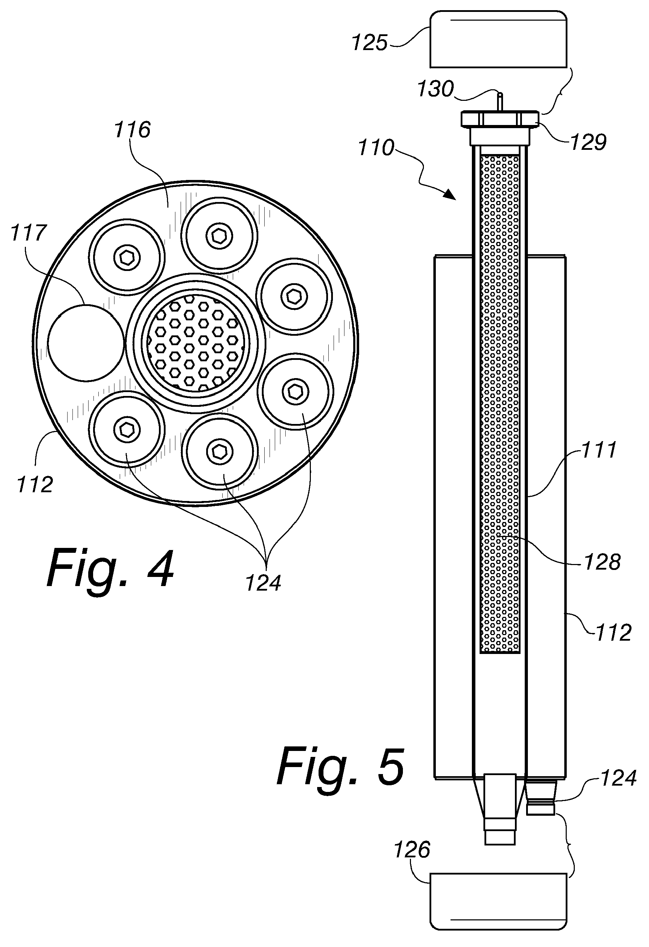

Figure 4 shows the cover 116, which is lower in the active configuration of the apparatus 110 and comprises six ultrasonic vibration generators 124, the opposite cover 115 having the same number thereof.

In Figure 5 the apparatus 110 is shown, in an exploded view for the sake of clarity, with two corresponding protective domes 125 and 126 that are preset to shelter inside them the ultrasonic vibration generators 123 and 124.

The ultrasonic vibration generators cause the synchronized oscillation of the two covers 115 and 116 and of the tubular jackets 111 and 112 with them; this causes the generation of the phenomenon of cavitation on the tubular jackets 111 and 112, and consequently the fluid that flows over such tubular jackets is affected and modified by the phenomenon.

The two ducts, the central one 113 and the annular one 114, are preset to be mutually connected, for example by means of a connector 135, so that the fluid being treated first passes through the annular duct 114 and then is recirculated in the central duct 111.

In this manner, the same fluid receives the treatment provided by the apparatus 10 in its first embodiment substantially twice consecutively.

It is to be understood that the apparatus according to the invention, in both of the embodiments described herein 10 and 110, can be crossed by the fluid being treated also in the direction of circulation that is opposite to the one described above by way of example.

By way of the apparatus 110 according to the invention it is therefore possible to treat a larger quantity of fluid than known apparatuses and for a longer time than known apparatuses, with obvious advantages in terms of both production rates and product quality.

The central tubular jacket 111 has an upper fluid passage port 121 that is inclined laterally and an axial opening 127 for the insertion of a cartridge 128 that is preset to carry and retain solid or liquid materials with which one wishes the fluid being treated to make contact.

The cartridge 128 is fixed to the inner tubular jacket 111 by means of a ring 129 that is preset to be screwed onto a corresponding threaded portion of the end of the inner tubular jacket 111.

The cartridge 128 is provided with an actuation handle 130 in order to facilitate its insertion and extraction with respect to the central tubular jacket 111.

The ultrasonic vibrations transmitted by the vibration generators 123 and 124 cause a transfer of substances from the materials contained in the cartridge 128, which mix intimately with the fluid being treated by way of the emulsifying effect caused by ultrasonic cavitation.

For example, a similar apparatus 10 and 110 can be applied to provide medicinal infusions, by providing in the cartridge 28 or 128 suitable herbs, plants, aromas and the like, with a fluid being treated which can be water or an alcohol-based liquid or another suitable liquid.

Likewise, a similar apparatus 10 and 110 can be applied to provide an accelerated process for barrique aging a wine or a high-proof spirit by providing in the cartridge 28 or 128 wooden fragments of wooden material typical of barrels.

A similar apparatus 10 and 110 according to the invention can be applied for example also for the provision of a method for recovering wine from lees, by way of the ultrasonic vibrations that allow this separation.

A similar apparatus 10 and 110 according to the invention can be applied, again by way of example, also for the execution of a method for the lysis of the yeasts of a wine, by way of the ultrasonic vibrations that entail the rupture of the cells with corresponding extraction of the content; this method greatly increases the possibility to filter the lees, with a consequent considerable decrease in the use of fossil flours currently used with existing technologies.

Figure 3 shows schematically an apparatus 110 according to the invention inserted in a plant that comprises a vat, or a container 40 located upstream, for supplying a fluid to be treated, a pump 41 for sending the fluid under pressure to the apparatus 110, and a vat or container 42 for collecting the treated fluid, which is arranged downstream of the apparatus 110.

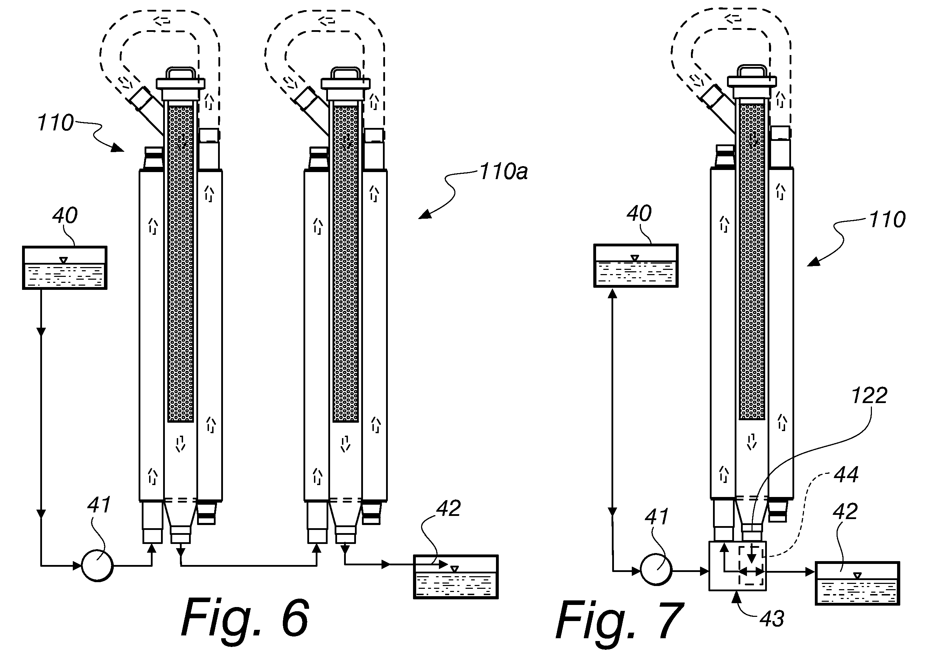

In another example of application, shown schematically in Figure 6, a utilization plant comprises two or more apparatuses 110 and 110a according to the invention arranged in series.

In a further example of application, shown schematically in Figure 7, a plant for use comprises an apparatus 110 according to the invention and a fluid recirculation device 43, which is provided with a valve for controlling the direction of the fluid that exits from the discharge port 122 of the central duct 111, by way of which the treated fluid, before being sent to the collection vat 42, can flow through the apparatus 110 a number of times, so as to receive a corresponding number of times the ultrasound treatment provided by the apparatus 110.

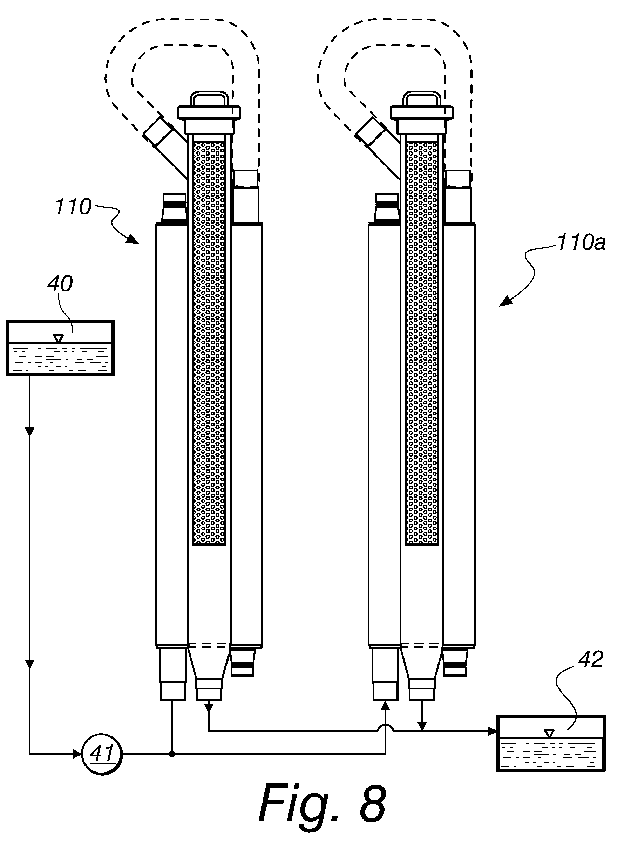

In another example of application, shown schematically in Figure 8, a utilization plant comprises two or more apparatuses 110 and 110a according to the invention which are arranged in parallel.

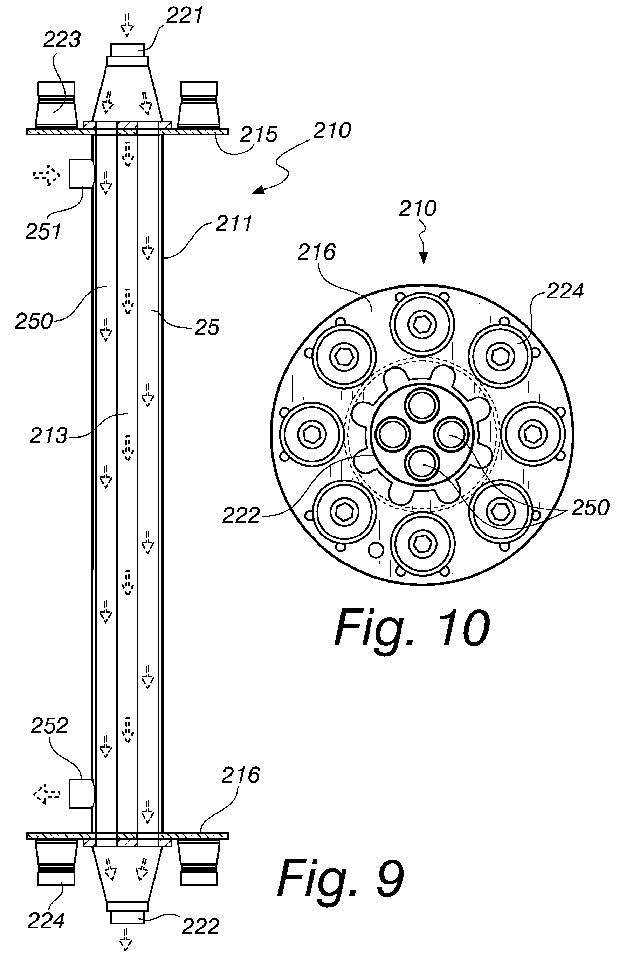

Figures 9 and 10 show by way of example a use of an apparatus 210 according to the invention, such apparatus 210 comprising a tubular jacket 211 that defines a duct 213 for a fluid.

Two supporting bodies 215 and 216 are present and are fixed integrally to the tubular jacket 211 for a plurality of ultrasonic vibration generators 223 and 224 respectively, for the vibration of the tubular jacket 211, the latter being connected to the supporting bodies 215 and 216 so as to allow transmission of the vibrations in order to generate ultrasonic cavitation.

The tubular jacket 211 is provided with two passage ports for a fluid, for example an intake port 221 and a discharge port 222.

The two supporting bodies 215 and 216 are each constituted by an annular flange that is welded to the tubular jacket 211 proximate to a passage port thereof 221 or 222 for the fluid being treated.

In particular, a first supporting body 215 is welded to the tubular jacket 211 proximate to the intake port 221 and the second supporting body 216 is welded proximate to the discharge port 222.

Inside the tubular jacket 211 there are one or more ceramic-based filtering elements 250 to be cleaned.

The filtering elements 250 are tubular and are locked inside the tubular jacket 211 so that a first stream of washing fluid passes through them, entering them from the first port 221, and exits from them at the second port 222.

The filtering elements 250 are coupled to the supporting bodies 215 and 216 by way of suitable anchorings and by way of the interposition of annular gaskets adapted to prevent the first stream from bleeding outside the filtering elements 250.

The tubular jacket 211 also comprises two more passage ports 251 and 252 respectively for the transit of a second washing fluid stream inside the tubular jacket 211 and outside the filtering elements 250.

By way of the apparatus 210 it is possible to clean the filtering elements 250 in an optimum manner, subjecting them to the streams of washing fluid that are cavitated by the ultrasonic vibrations transmitted by the tubular jacket 211.

A similar apparatus 210 can be inserted with the function of a filtration assembly in a plant that requires a certain type of filtration for a fluid, such filtration being achievable with the passage of such fluid through the ceramic filtering elements 250, with the advantage for the apparatus 210 of being preset for cleaning the filtering elements 250, whereas in similar known filtration assemblies it is necessary to remove the filtering elements to clean them separately or it is necessary to clean the filtering elements inside the tubular jacket by means of countercurrent streams that contain appropriate detergents, in any case in a more expensive manner and taking a longer time.

In practice it has been found that the invention achieves the intended aim and objects.

In particular, the invention provides an apparatus that is capable of treating a higher flow rate of fluid with respect to known apparatuses.

Moreover, the invention provides an apparatus that is simpler to clean with respect to apparatuses of the known type, since the accumulation regions, such as for example the covers and the cartridge, can be washed easily with an appropriate flushing with detergents.

Furthermore, the invention provides an apparatus that is capable of treating in an optimum manner a larger quantity of fluids than apparatuses of the known type, since such apparatus can be crossed twice and therefore has a transit path that is twice the length, or the height, of the apparatus proper.

Moreover, the invention provides an apparatus by means of which it is possible to work with operating pressures for the fluid that are higher than one atmosphere, since this is a closed apparatus that can be inserted in a hydraulic circuit in the ducts of which the pressure can be adjusted according to the requirements and the technical needs.

Moreover, the invention provides an apparatus that is well-suited for the treatment of agroalimentary fluids.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to requirements and to the state of the art.

The disclosures in Italian Patent Application No. 102015000041254 (UB2015A002755) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for treating fluids with ultrasound, **characterized in that** it comprises at least one tubular jacket (11), which defines a duct (13) for a fluid being treated, at least one body (15) being provided and fixed integrally to said at least one tubular jacket (11) to support a plurality of generators of ultrasonic vibrations (23) in order to vibrate said at least one tubular jacket (11), said jacket being connected to said supporting body so as to allow vibration transmission.

2. The apparatus according to claim 1, **characterized in that** it comprises two supporting bodies (15, 16), each constituted by an annular flange that is welded to the tubular jacket (11) proximate to a port thereof (21, 22) for the passage of the fluid being treated.

3. The apparatus according to one or more of the preceding claims, **characterized in that** said tubular jacket (11) has an upper fluid passage port (21) that is inclined laterally and an axial opening (27) for the insertion of a cartridge (28) that is intended to carry solid or liquid materials with which the fluid being treated is to make contact.

4. The apparatus according to one or more of the preceding claims, **characterized in that** it comprises at least two concentric tubular jackets (111, 112), an inner tubular jacket (111) and at least one outer tubular jacket (112), which define a central duct (113) and at least one surrounding annular duct (114), two opposite supporting bodies (115, 116) being arranged so as to close said at least one annular duct (114), each one of said supporting bodies (115, 116) having a passage port (117, 118) for the fluid that passes in said annular duct (114), and a central opening (119, 120) that is crossed by said inner tubular jacket (111), the latter being provided at its ends with corresponding passage ports (121, 122) for the fluid being treated, each one of said supporting bodies (115, 116) being integral with all of said concentric tubular jackets (111, 112) and having a plurality of ultrasonic vibration generators (123, 124) for the vibration of said covers and of the tubular jackets connected to said covers so as allow transmission of the vibrations.

5. The apparatus according to one or more of the preceding claims, **characterized in that** said ultrasonic vibration generators (23, 24, 123, 124) are of the type that operates between 20 kHz and 60 kHz.

6. The apparatus according to one or more of the preceding claims, **characterized in that** said two central (113) and annular (114) ducts are preset to be connected to each other by means of a connector (135).

7. The apparatus according to one or more of the preceding claims, **characterized in that** said central tubular jacket (111) is provided with an axial opening (127) for the insertion of a cartridge (128) preset to carry solid or liquid materials with which the fluid being treated is to make contact.

8. The apparatus according to one or more of the preceding claims, **characterized in that** said cartridge (28) is fixed to the inner tubular jacket (11) by means of a ring (29) preset to be screwed to a corresponding threaded portion of the end of the inner tubular jacket (11).

9. The apparatus according to one or more of the preceding claims, **characterized in that** one or more ceramic-based filtering elements (250) to be cleaned are arranged inside the tubular jacket (211), said filtering elements (250) being tubular and being locked inside the tubular jacket (211) so that a first stream of washing fluid passes through them, entering them from a first port (221), and exits from them at a second port (222).

10. The apparatus according to one or more of the preceding claims, **characterized in that** said filtering elements (250) are coupled to supporting bodies (215, 216) with adapted anchorings and by interposition of annular gaskets adapted to prevent the first stream from bleeding outside said filtering elements (250), said tubular jacket (211) comprising two more passage ports (251, 252) for transit inside the tubular jacket (211), and outside the filtering elements (250), of a second stream of washing fluid.
